# EUROPÄISCHE PATENTSCHRIFT

(11) **EP 1 704 128 B1**
(45) Veröffentlichungstag und Bekanntmachung des Hinweises auf die Patenterteilung: **30.09.2009**
(21) Anmeldenummer: 05700787.4
(22) Anmeldetag: 11.01.2005
(51) Int. Cl.: C04B 35/01, C10C 1/04

(54) **HERSTELLUNG VON UMWELTFREUNDLICHEN KOHLENSTOFFGEBUNDENEN FEUERFESTERZEUGNISSEN IM KALTMISCHVERFAHREN**
PRODUCTION OF ENVIRONMENTALLY FRIENDLY CARBON-COMBINED FIREPROOF PRODUCTS ACCORDING TO A COLD MIXING METHOD
PROCEDE POUR PRODUIRE DES PRODUITS A LIAISON CARBONE QUI RESISTENT AU FEU ET SONT ECOLOGIQUES DANS LE CADRE D'UN PROCEDE DE MELANGE A FROID

(30) Priorität: 17.01.2004 DE 102004002561
(43) Veröffentlichungstag der Anmeldung: 27.09.2006
(73) Patentinhaber: RÜTGERS Germany GmbH, 44579 Castrop-Rauxel (DE)
(72) Erfinder: ANEZIRIS, Christos, 09599 Freiberg (DE); BOENIGK, Winfried, 59348 Lüdinghausen (DE); BORZOV, Dmitry, 56332 Dieblich (DE); JACOB, Christoph, 45355 Essen (DE); STIEGERT, Jens, 44149 Dortmund (DE); SCHNITZLER, Dirk, 44629 Herne (DE); ULBRICHT, Joachim, 09599 Freiberg (DE)
(74) Vertreter: Cohausz & Florack
(86) Internationale Anmeldenummer: PCT/EP2005/000147
(87) Internationale Veröffentlichungsnummer: WO 2005/068391

(56) Entgegenhaltungen:
- EP-A- 0 708 064
- EP-A- 0 957 150
- US-A- 3 285 760
- US-A- 5 262 043
- US-A- 5 403 526

## Beschreibung

Die Erfindung betrifft ein Verfahren zur Herstellung von kohlenstoffgebundenen Feuerfesterzeugnissen aus feuerfesten Körnungen, Kohlenstoffträgern und organischem Bindemittel.

Feuerfesterzeugnisse werden als Auskleidungen von metallurgischen Gefäßen und als feuerfeste Funktionalprodukte, beispielsweise sogenannte Schieberplatten, eingesetzt. Der Verschleiß im Aggregat macht einen kontinuierlichen Ersatz der Erzeugnisse notwendig. Der Verschleiß erfolgt hauptsächlich über Korrosion durch Infiltration von Schlacke, Entkohlung (Oxidation der Koksbindung und des Kohlenstoffträgers), Abrieb und durch Abplatzen von Erzeugnisstücken infolge von Thermospannungen.

Die zur Herstellung dieser Erzeugnisse verwendeten Bindemittel sind multifunktional. Sie ermöglichen die Formgebung der feuerfesten Körnungen und gewährleisten die Formstabilität der Erzeugnisse beim Einbau in das Aggregat und dem anschließenden erstmaligen Aufheizen. Sie bilden im gebrannten Zustand eine Koksbindung und liefern den zur Verminderung der Schlackeninfiltration benötigten Kohlenstoff. Der als Bindephase verwendete Kohlenstoff wird durch Pyrolyse organischer Ausgangsverbindungen erzeugt. Dazu werden die feuerfesten Körnungen mit verkokbaren Bindern, entweder thermoplastischen bituminösen Bindern wie Steinkohlenteerpechen und aromatischen Petropechen (im folgenden Binderpeche genannt) heiß, oder härtbaren Kunstharzen, die nach Härtung bei 150 bis 250 °C duroplastische Strukturen ausbilden, in der Regel kalt gemischt.

Die aus der Pyrolyse oder Carbonisierung von Kunstharzen hervorgehende Koksbindung ist wegen der dreidimensionalen Vernetzung isotrop, nicht grafitierbar, hart und spröde und wegen der großen inneren Oberfläche oxidationsempfindlich.

Die Pyrolyse von Binderpech erfolgt dagegen in flüssiger Phase und führt zu einer geordneten Ablagerung von hexagonalen Kohlenstoffsch ichten. Es bildet sich eine anisotrope, grafitierbare, weiche und flexible Koksbindung, die aufgrund ihrer kleinen inneren Oberfläche deutlich unempfindl icher gegen Oxidation ist. Der Einsatz von Binderpech führt gegenüber Kunstharz in der Regel zu einem geringeren Verschleiß der Erzeug nisse im Aggregat, da die Bindung aus Binderpechen aufgrund ihrer anisotropen Koksstruktur eine bessere Thermoschock- und Oxidationsbeständigkeit aufweist.

Bei der Verarbeitung von Bindemittel und feuerfester Körnung unterscheidet man die heiße und kalte Formgebung (Heiß- und Kaltmischverfahren). Bei der kalten Formgebung werden die feuerfesten Körnungen ohne Vorwärmen bei Raumtemperatur in den unbeheizten Mischer gegeben. Das Bindemittel wird in der Regel kalt, d.h. bei Raumtemperatur zugegeben. Bei hochviskosen Bindern kann es zur besseren Dosierung vorgewärmt in den Mischer eingebracht werden. Durch die innere Reibung der Körnung beim Mischen kann sich das Mischgut auf bis zu 60 °C erwärmen. Die nachfolgende Verdichtung und Formgebung der feuchten Masse erfolgt ebenfalls bei Raumtemperatur. Der Vorteil der kalten Formgebung und damit der Kunstharzbindung sind die deutlich geringeren Investitionskosten, da aufwendige Heizsysteme entfallen. Weil alle Komponenten kalt verarbeitet werden, sind die Energieeinsparungen für den laufenden Betrieb erheblich.

Bei der heißen Formgebung müssen die feuerfesten Körnungen und das Bindemittel vor Zugabe in den Mischer auf Temperaturen oberhalb des Erweichungspunktes des Bindemittels gebracht werden. Zusätzlich muss der Mischer beheizt werden. Auch das nachfolgende Verdichten oder Pressen erfolgt bei Temperaturen oberhalb des Erweichungspunktes des Bindemittels. Binderpeche mit einer für die Anwendung ausreichend hohen Koksausbeute sind bei Raumtemperatur fest oder hochpastös und lassen sich nur mit der heißen Formgebung verarbeiten. Ein wesentlicher Nachteil bei Binderpechen, insbesondere bei Steinkohlenteerpechen, ist der umweltgefährdende und gesundheitsschädliche Gehalt an Benzo[a]pyren (B[a]P) von bis zu 15.000 mg/kg. Da Binderpeche heiß verarbeitet werden, kommt es aufgrund des in der Hitze hohen Dampfdruckes zu B[a]P-Emissionen mit dem entsprechenden Gefährdungspotential. Auch beim Aufheizen der Feuerfesterzeugnisse während des erstmaligen Gebrauchs werden B[a]P enthaltende Kohlenwasserstoffdestillate freigesetzt. Der Gesetzgeber hat diesem Gefährdungspotential dadurch Rechnung getragen, dass Feuerfesterzeugnisse mit einem Gehalt an B[a]P über 50 mg/kg als Gefahrstoff gekennzeichnet und unter entsprechenden Vorsichtsmaßnahmen gehandhabt werden müssen. In Deutschland wird deshalb in der sogenannten TRGS 551 empfohlen, wenn immer technisch machbar, Feuerfesterzeugnisse mit weniger als 50 mg/kg Benzo[a]pyren einzusetzen. Hieraus ist ersichtlich, dass der Einsatz von Binderpechen trotz aller technischer Vorteile seit Jahren rückläufig ist.

Die Herstellung von kalt geformten Feuerfesterzeugnissen unter Verwendung von Binderpechen ist grundsätzlich bekannt. So wird in der GB 690 859 das Herstellen einer Stampfmasse und von Steinen aus feuerfesten Körnungen und einem gepulverten Binderpech beschrieben, wobei man zu dem Gemisch aus feuerfesten Körnungen und gepulvertem Binderpech ein Plastifizierungsmittel wie Kerosin, Benzol oder Kreosot gibt, das die Dichte des erhaltenen Produkts erhöhen soll.

In der US 3 285 760 wird eine Stampfmasse aus feuerfesten Körnungen und gepulvertem Binderpech beschrieben. Als Lösungsmittel oder Schmiermittel für das gepulverte Binderpech wird hier die Verwendung von Anthracen- oder Schweröl vorgeschlagen.

In der US 3 415 667 wird eine Technik zum Herstellen von pechgebundenen feuerfesten Massen beschrieben, bei der ein flüssiges organisches Lösungsmittel zur Verflüssigung des Binderpechs verwendet wird. Im folgenden wird das verflüssigte Binderpech zuerst mit den groben und anschließend mit den feinen Körnungen vermischt und verpresst. Als Lösungsmittel wird vorzugsweise ein trichlorierter Kohlenwasserstoff verwendet. Ähnlich wird in der GB 978 185 verfahren. Bei diesem Verfahren werden ein Binderpech und ein organisches Lösungsmittel derart miteinander gemischt, dass ein Binder mit einer Viskosität von nicht mehr als 80 Poise entsteht. Beiden Verfahren ist der hohe verfahrenstechnische Aufwand gemeinsam, da in einem zusätzlichen Verfahrensschritt zunächst Binderpech und organisches Lösungsmittel zu einem einsatzfähigen Bindemittel verarbeitet werden müssen.

Das in der US 4 071 593 beschriebene Verfahren arbeitet mit einer Kombination aus Binderpech und einer wässrigen Ligninsulfonatlösung und/oder einer Lösung wärmehärtender Alkydharze in organischen Lösungsmitteln. Ein Nachteil des Verfahrens ist, dass keine hydratationsempfindlichen Rohstoffe wie Dolomit verarbeitet werden können und dass neben anisotropen Koksstrukturen auch oxidationsempfindliche und spröde isotrope Koksstrukturen erhalten werden.

Bei dem in der DE 31 49 485 A1 beschriebenen Verfahren werden 0,5 bis 15 % Binderpech und bis zu 5 % einer organischen Flüssigkeit, bezogen auf den Binderpechgehalt, der feuerfesten Mischung zugesetzt. Zum Verpressen wäre eine solche Masse jedoch zu trocken. Dem Ausführungsbeispiel ist zu entnehmen, dass zusätzlich als Plastifizierungsmittel Sulfitablauge, Wasser sowie Ton benötigt werden. Man erhält daher neben einer Koksbindung auch eine keramische Bindung. Ein Nachteil des Verfahrens ist, dass keine hydratationsempfindlichen Rohstoffe wie Dolomit verarbeitet werden können.

Gemeinsam ist allen aufgeführten Verfahren der hohe B[a]P-Gehalt des Binderpechs. Die erhaltenen Erzeugnisse sind somit nach europäischem Recht als Gefahrstoffe zu kennzeichnen und erfüllen nicht die Empfehlung der TRGS 551. Verglichen mit Kunstharzsystemen erweisen sich die oben aufgeführten Bindemittelkombinationen hinsichtlich der Produkteigenschaften Kaltdruckfestigkeit, Heißbiegefestigkeit und Porosität deutlich unterlegen und werden daher kaum eingesetzt.

Neuere Entwicklungen ermöglichen das Einbringen von pechtypischen, grafitierbaren, anisotropen Koksstrukturen in kunstharzgebundene kalt geformte Erzeugnisse unter Einhaltung der TRGS 551. Hierbei wird ein Teil des Kunstharzes durch ein gemahlenes, B[a]P-armes und hochschmelzendes Binderpechpulver substituiert. Nachteilig gegenüber einer reinen Pechbindung erweist sich jedoch, dass im Produkt teilweise isotrope und somit oxidationsempfindliche Koksstrukturen vorliegen (Boenigk, W. et al. CARBORES® - a carbon speciality to improve the performance of refractories bound with phenolic resins., Proceedings Eurocarbon 2000, 1st World Conference on Carbon, 9 bis 13 July 2000, Berlin S.367-368/// Aneziris, C.G. et al. Untersuchungen an Spezialbindemitteln für feuerfeste MgO-C-Erzeugnisse., Proceedings,14. Konferenz über feuerfeste Baustoffe, 20./21. Mai 2003, Prag S.118-126).

Die US 3 285 760 betrifft die Herstellung lagerstabiler Feuerfestmassen. Steinkohlenteerpech wird als Bindemittel vorgeschlagen. Das Steinkohlenteerpech hat einen Erweichungspunkt von 148 bis 205 °C und weist Benzo[a]pyrenwerte von 2000 bis 6000 mg/kg auf. Als Lösungsmittel wird Anthrazenöl offenbart. Die US 5 403 526 beschreibt ein Verfahren zur Herstellung eines von Benzo[a]pyren freien kohlenstoffhaltigen Feuererfestmaterials und setzt hierzu als Bindemittel ein Gemisch aus Bitumen und einem synthetischen Harz ein, wobei durch das Harz die ansonsten störende hohe Viskosität des Bitumens verringert wird.

Die DE 41 12 955 A1 beschreibt die Herstellung eines Steinkohlenteerpechs mit einem verminderten Gehalt an Carcionogenen sowie dessen Einsatz als Binde- und Imprägniermittel.

Der Erfindung liegt die Aufgabe zugrunde, ein Verfahren zur Herstellung von kohlenstoffgebundenen Feuerfesterzeugnissen bereitzustellen, das ein sogenanntes Kaltmischen der verwendeten Bestandteile und den Erhalt von Feuerfesterzeugnissen mit anisotroper Koksstruktur bei hoher Festigkeit und Benzo[a]pyren-Gehalten von unter 50 mg/kg ermöglicht.

Der Erfindung liegt ferner die Aufgabe zugrunde, ein Bindemittelsystem zum Einsatz im zuvor genannten Verfahren bereitzustellen.

Diese Aufgabe wird gelöst durch ein Verfahren zur Herstellung von kohlenstoffgebundenen Feuerfesterzeugnissen aus feuerfesten Körnungen und organischem Bindemittel, in dem man als organisches Bindemittel ein pulverförmiges, grafitierbares Steinkohlenteerpech mit einem Benzo(a)pyrengehalt kleiner 500 mg/kg und einem Verkokungsrückstand von mindestens 80 Gew.% nach DIN 51905 (Hochtemperatur binder) und ein bei Raumtemperatur flüssiges grafitierbares Bindemittel mit einem Verkokungsrückstand von mindestens 15 Gew.% mit einem Benzo[a]pyrengehalt von kleiner als 500 mg/kg nach DIN 51905 einsetzt, dieses mit den übrigen Bestandteilen mischt, in einen Formkörper überführt und anschließend bei einer Temperatur von 150 bis 400°C behandelt, wobei das Hüssige grofitierbar Bindemittel eine Lösung des Hochtemperatur binders in einer Konzentration von 10 bis 65 bzw.1. in einem hocharomatischen Öl ist.

Das pulverförmige grafitierbare Steinkohlenpech ist bei Temperaturen oberhalb von 150 °C in dem flüssigen Bindemittel löslich. Es hat vorzugsweise einen Erweichungspunkt von über 180 °C, besonders bevorzugt über 220 °C.

Überraschend wurde festgestellt, dass sich die Vorteile des Einsatzes von Kunstharzen einerseits und Steinkohlenteerpechen andererseits vereinen lassen, wenn man nach dem erfindungsgemäßen Verfahren arbeitet. Die Vorteile liegen insbesondere darin, dass im energiesparenden Kaltmischverfahren gearbeitet werden kann und dennoch pechtypische anisotrope und grafitierbare Koksstrukturen erhalten werden, was zu hohen Festigkeiten der erhaltenen Feuerfesterzeugnisse und signifikant verbesserter Oxidationsbeständigkeit führt.

Der erfindungsgemäße Einsatz des ausgewählten Steinkohlenteerpechs ermöglicht einen geringen Benzo(a)pyrengehalt im Feuerfestprodukt von unter 50 mg/kg. Dieses Steinkohlenteerpech wird erfindungsgemäß als Hochtemperaturbinder verwendet Dieser Hochtemperaturbinder liegt vorzugsweise pulverförmig vor. Die mittlere Korngröße kann 10 bis 500 µm, vorzugsweise 50 bis 200 µm, betragen.

Gemäß einer weiteren bevorzugten Ausführungsform wird der Hochtemperaturbinder mit einem Staubbindemittel benetzt. Dadurch kann Staubbildung vermieden und das Einbinden in die feuerfeste Masse verbessert werden. Das Staubbindemittel ist vorzugsweise ein hochsiedendes erdölstämmiges Öl, welches das Pulver nicht anlöst. Naphthenische Öle mit Siedepunkten über 300 °C und einer Dichte von kleiner als 1 sind besonders gut geeignet Das Staubbindemittel kann in einer Menge von bis 5 Gew.%, insbesondere 0,5 bis 3 Gew.%, bezogen auf die Gesamtmasse des Hochtemperaturbinders, eingesetzt werden.

Das erfindungsgemäß verwendete flüssige Bindemittel ist eine Lösung des Hochtemperaturbinders in einem hocharomatischen Öl, beispielsweise aus der Steinkohlenteerdestillation. Besonders bevorzugt ist ein Siedeschnitt von 250 bis 370 °C. Das flüssige Bindemittel wirkt als Plastifizierungsmittel und gewährleistet somit, dass das feuerfeste Gemisch formbar ist und eine für die Handhabung ausreichende Festigkeit aufweist. Die Konzentration des Hochtemperaturbinders in dem hocharomatischen Öl hängt von der zu erzielenden Viskosität des Flüssigbinders ab. Sie beträgt 10 bis 65 Gew.% oder 25 bis 65 Gew.%, bezogen auf die Masse des flüssigen Bindemittels.

Das erfindungsgemäß als organischer Binder eingesetzte pulverförmige, grafitierbare Steinkohlenteerpech ist erhältlich durch Destillation von Steinkohlenteer in einer ersten Destillationsstufe unter Normaldruck oder vermindertem Druck und Destillation des Rückstands der ersten Destillationsstufe unter einem Druck von vorzugsweise nicht mehr als 1 mbar in einem Verdampfer, wobei die Temperatur im Verdampfer vorzugsweise im Temperaturbereich von 300 bis 380°C liegt. Die mittlere Verweilzeit des Rückstands im Verdampfer beträgt vorzugsweise 2 bis 10 min.

Die erfindungsgemäß erhältliche Feuerfestmasse kann als Bindemittel 0,5 bis 4 Gew.%, vorzugsweise 1 bis 2,5 Gew.%, des Hochtemperaturbinders, bezogen auf die Gesamtmasse der feuerfesten Mischung, enthalten. Der Anteil des flüssigen Bindemittels kann 1,3 bis 4 Gew.%, vorzugsweise 2 bis 3 Gew.%, jeweils bezogen auf die Gesamtmasse der feuerfesten Mischung, betragen.

Erfindungsgemäß geeignete Körnungen können anorganische Oxide, deren Einsatz zur Herstellung von Feuerfestkörpern bekannt ist, umfassen. Solche schließen vorzugsweise Magnesiumoxid, Dolomit, Aluminiumoxid, Zirkonoxid oder deren Gemische ein. Besonders bevorzugt ist der Einsatz von Magnesiumoxid, beispielsweise Schmelzmagnesia und/oder Sintermagnesia.

Zur Erhöhung des Kohlenstoffgehalts des Feuerfesterzeugnisses kann man dem Gemisch aus feuerfesten Körnungen, Hochtemperaturbinder und organischem Binder vor der Formgebung weitere kohlenstoffhaltige Stoffe, insbesondere Grafit und/oder Ruß, zusetzen. Ferner können auch Benetzungs- und Dehydrierungsmittel, beispielsweise Schwefel, organische Nitroverbindungen oder anorganische Nitrate, zugefügt werden zur Verbesserung der Mischbarkeit und zur Steigerung der Koksausbeute und Festigkeit. Antioxidantien können zur Verringerung des Kohlenstoffabbrandes beim Einsatz der fertigen Erzeugnisse zugesetzt werden.

Die Formgebung kann in bekannter Weise durch übliche auf diesem technischen Gebiet verwendete Presseinrichtungen erfolgen. So sind beispielsweise Drücke von 100 bis 300 MPa zur Formgebung geeignet.

Das erhaltene sogenannte "grüne" Erzeugnis wird anschließend einer Wärmebehandlung unterzogen. Diese Behandlung kann bei einer Temperatur von 150 bis 400°C vorgenommen werden. Die Dauer der Behandlung hängt von der Größe der geformte Produkte ab und kann bis zu 20 oder mehr Stunden betragen. Dies führt zu einer Steigerung der Warmdruckfestigkeit.

Die gewünschte endgültige Koksstruktur des Bindemittels bildet sich beim ersten Aufheizen des getemperten Materials im Aggregat aus.

Die mit dem erfindungsgemäßen Bindersystem hergestellten feuerfesten Steine können ferner problemlos verarbeitet werden. Nach dem Pressen werden Kaltdruckfestigkeiten von 6 bis 12 MPa und damit ein ähnliches Niveau wie bei kaltgeformten kunstharzgebundenen Steinen erreicht. Die Kaltdruckfestigkeiten nach dem Tempern liegen im Bereich von 20 bis 30 MPa und sind für einen problemlosen Einbau in das Aggregat und für die mechanischen Belastungen während der Erstaufheizung ausreichend hoch. Nach dem Verkoken bei 1.000 °C erhält man Kaltdruckfestigkeiten von 20 bis 30 MPa und eine Porosität von etwa 11 %. Die Kaltdruckfestigkeit und Porosität sind mit denen kunstharzgebundener Erzeugnisse vergleichbar. Die neuen Bindersysteme bilden eine rein anisotrope, grafitierbare und weiche Koksmatrix (soft-bonding). Daraus ergibt sich eine verbesserte Thermoschock- und Oxidationsbeständigkeit der Erzeugnisse. Die mit dem erfindungsgemäß eingesetzten Steinkohlenteerpech als Hochtemperaturbinder hergestellten Erzeugnisse weisen einen Benzo[a]pyren-Gehalt von < 50 ppm auf, erfüllen die Empfehlung der deutschen TRGS 551 und sind nach europäischem Recht nicht als Gefährstoff zu kennzeichnen.

Die folgenden Beispiele dienen der weiteren Erläuterung der Erfindung. Soweit wie möglich wurden für die Analytik bestehende DIN-Normen verwendet.

### Beispiele

In Tabelle 1 sind die technischen Normen angegeben, die zur Charakterisierung der erfindungsgemäß eingesetzten Materialien angewendet wurden.

**Tabelle 1 - Normen**

| | |
|---|---|
| Erweichungspunkt | DIN 51920 |
| Toluol-Unlösliches (TI) | DIN 51906 |
| Chinolin-Unlösliches (Q) | DIN 51921 |
| Verkokungsrückstand | DIN 51905 |
| Aschewert | DIN 51922 |
| Benzo[a]pyren | HPLC |

### Beispiel 1

### Herstellung eines Hochtemperaturbinders aus Steinkohlenteerpech

Ein Steinkohlenteerpech [Erweichungspunkt (Mettler) EPM = 113 °C, TI = 29 %, QI = 8,5 %, β-Harze = 20,6 %, Verkokungsrückstand = 59,2 %, BAP-Gehalt = 1,1 %, Schmelzbeginn (TMA) = 36°C, Schmelzende (TMA) = 86°C] wird bei einem Vakuum von 1 mbar mit einer Destillationstemperatur von 355 °C im Verdampfer bei einer mittleren Verweilzeit von etwa 5 Minuten destilliert. Das erhaltene Pech kann erfindungsgemäß als Hochtemperaturbinder (Bindemittel A) eingesetzt werden und ist durch Analysendaten der Tabelle 2 charakterisiert.

**Tabelle 2 - Eigenschaften des erhaltenen Hochtemperaturbinders**

| Produkt | Verkokungsrückstand [Gew.%] | Asche [Gew.%] | TI [Gew.%] | QI [Gew.%] | Erweichungspunkt [ºC] | B[a]P-Gehalt, [ppm] |
|---|---|---|---|---|---|---|
| Bindemittel A | 85,5 | 0,3 | 57,5 | 16,2 | 230 | 273 |

### Beispiel 2

### Herstellung eines flüssigen Bindemittels aus einem Hochtemperaturbinder

40 Gew.-Teile des Steinkohlenteerpechs aus Beispiel 1 werden in 60 Gew.-Teilen Anthracenöl (B[a]p-Gehalt 40 ppm, Siedebereich 250-370°C) gelöst. Das erhaltene Bindemittel B weist die in Tabelle 3 angegebenen Eigenschaften auf.

**Tabelle 3 - Eigenschaften des erhaltenen flüssigen Hochtemperaturbinders**

| Produkt | Verkokungs-Rückstand [Gew.%] | Asche [Gew.%] | TI [Gew.%] | QI [Gew.%] | Dyn. Viskosität 20ºC [mPas] | B[a]P-Gehalt [ppm] |
|---|---|---|---|---|---|---|
| Bindemittel B | 32 | 0,3 | 17,9 | 5,4 | 3.000 | 220 |

### Beispiel 3

### Herstellung von drei Versätzen und daraus erhältlichen Formkörpern

Es werden drei Versätze (3a-c) nach dem erfindungsgemäßen Verfahren hergestellt und mit 3 Vergleichsversätzen (V1-3) verglichen. In V1 wird ein heute übliches Phenolharzsystem aus flüssigem Resol und einem pulverförmigen Novolak eingesetzt. In V3 wird ein Anthracenöl gemäß der US 3 285 760 und in V2 ein traditionelles Steinkohlenteerpech verwendet.

Zur Herstellung der erfindungsgemäßen pyrolisierten Formkörper wird das flüssige Bindemittel B aus Beispiel 2 den jeweiligen Körnungen in einer Menge von jeweils 2 Gew.% und der Hochtemperaturbinder A von Beispiel 1 in einer Menge von 1,3 Gew.% (Versatz 1), 2,3 Gew.% (Versatz 2) und 3,3 Gew.% (Versatz 3), jeweils bezogen auf die Gesamtmasse an feuerfester Mischung, zugegeben. Die Eigenschaften der verwendeten Körnungen sind Tabelle 4 zu entnehmen. Es wird so viel Grafit zugegeben (9-12 %), dass die Erzeugnisse einen Restkohlenstoffgehalt von 13 bis 14 % erreichen. Die Eigenschaften des verwendeten Graphits sind Tabelle 5 zu entnehmen. Das Mischen erfolgt in einem in der Feuerfestindustrie üblichen Zwangsmischer ohne Erwärmung. Die Zusammensetzung der Gemische ist Tabelle 8 zu entnehmen.

Die aufbereitete feuchte Masse wird unter einem Druck von 150 MPa zu Formkörpern verdichtet. Danach werden die Formkörper bei 300 °C getempert und anschließend bei 1000 °C pyrolisiert / verkokt. Die Eigenschaften der Feuerfest-Produkte in der in Tabelle 7 zusammengefaßt.

**Tabelle 4 - Eigenschaften der feuerfesten Körnungen**

| MgO-Rohstoff | Kornraumgewicht g/cm³ | MgO, Gew.% | Fe₂O₃, Gew.% | C/S Verhältnis |
|---|---|---|---|---|
| Schmelzmagnesia | 3,52 | 97,8 | 0,5 | 3 |
| Sintermagnesia | 3,41 | 98,0 | 0,12 | 6 |

**Tabelle 5 - Eigenschaften des verwendeten Grafits**

| Typ | Normalflocke |
|---|---|
| Kohlenstoffgehalt | 94-96 Gew.% |
| Aschegehalt (DIN 51903) | 4-6 Gew.% |
| Feuchtigkeitsgehalt (DIN 51904) | < 0,3 Gew.% |
| Korngrößenverteilung (DIN 51938) | min 70 Gew.% > 160 µm |
| | min 95 Gew.% > 71 µm |
| Spezifische Oberfläche (DIN 66131) | 1 m²/g |
| Schüttgewicht (DIN EN ISO 60) | 650 g/l |

**Tabelle 6 - Zusammensetzung der Gemische**

| Komponenten | Versatz 1 [Gew.%] | Versatz 2 [Gew.%] | Versatz 3 [Gew.%] | Vergleich V1 [Gew.%] | Vergleich V2 [Gew.%] | Vergleich V3 [Gew.%] |
|---|---|---|---|---|---|---|
| Schmelzmagnesia 3-6mm | 19,52 | 19,50 | 19,56 | 19,61 | 19,56 | 19,59 |
| Schmelzmagnesia 1 - 3 mm | 31,40 | 31,37 | 31,46 | 31,55 | 31,46 | 31,52 |
| Schmelzmagnesia 0 s 1 mm | 21,22 | 21,19 | 21,26 | 21,32 | 21,26 | 21,30 |
| Magnesiamehl (DIN 70) | 12,73 | 12,72 | 12,75 | 12,79 | 12,75 | 12,78 |
| Flockengraphit | 11,57 | 11,08 | 9,86 | 11,63 | 9,86 | 11,62 |
| Anthracenöl | | | | | | 1,3 |
| Bindemittel B | 2,0 | 2,0 | 2,0 | | | |
| Bindemittel A | 1,3 | 2,3 | 3,3 | | | 2,0 |
| Novolakpulver | | | | 1,2 | | |
| Resol, flüssig | | | | 2,0 | | |
| Steinkohlenteerpech | | | | | 5,0 | |
| Restkohlenstoff | 13,2 | 13,5 | 13,1 | 13,1 | 13,1 | 13,2 |

### Ergebnisse

**Tabelle 7 - Eigenschaften der gepressten, getemperten und pyrolisierten Formkörper**

| Beispiel | Bindemittel Gew.% | Nach dem Pressen | | Nach dem Tempern (300ºC) | | | | | Nach dem Verkoken (1000 °C) | | | | | |
|---|---|---|---|---|---|---|---|---|---|---|---|---|---|---|
| | | Rohdichte g/cm³ | KDF N/m m² | Rohdichte g/cm³ | Längenänderung, % | | KDF, N/mm² | OP, % | Rohdichte g/cm³ | Längenänderung, % | | KDF, N/m m² | OP, % | Koksstruktur |
| | | | | | in PR | senk. zur PR | | | | in PR | senk. zur PR | | | |
| 1 | 1,3% A +2,0% B | 2,99 | 10 | 2,97 | 0,40 | 0,24 | 30 | 7,9 | 2,92 | 0,37 | 0,36 | 27 | 11,2 | anisotrop |
| 2 | 2,3% A +2,0% B | 2,99 | 10 | 2,94 | 0,58 | 0,28 | 26 | n.b. | 2,88 | 0,45 | 0,36 | 26 | 11,5 | anisotrop |
| 3 | 3,3% A +2,0% B | 2,96 | 10 | 2,88 | n.b. | n.b. | 21 | n.b. | 2,81 | 0,54 | 0,39 | 21 | n.b. | anisotrop |
| V 1 | 2,0% Resol +1,2%Novolakpulver | 3,05 | 10 | 3,03 | 0,08 | 0,04 | 69 | 3,3 | 2,98 | 0,10 | 0,24 | 28 | 9,5 | isotrop |
| V 2 | Steinkohlenteerpech | 2,95 | 24 | 2,84 | 0,94 | 0,74 | 22,9 | 10,6 | 2,82 | 1,03 | 0,89 | 24,4 | 12,5 | anisotrop |
| V 3 | 1,3% Anthracenöl +2% B | 2,99 | 7 | 2,91 | n.b. | n.b. | 18 | n.b. | 2,86 | 0,35 | 0,31 | 16 | 13,5 | anisotrop |

| | | | | | | | | | | | | | | |
|---|---|---|---|---|---|---|---|---|---|---|---|---|---|---|
| A = pulverförmiger grafitierbarer Hochtemperaturbinder, B = flüssiger grafitierbarer Hochtemperaturbinder | | | | | | | | | | | | | | |

In den erfindungsgemäßen Versätzen 1 bis 3 wird die Konzentration des flüssigen Binderpechs konstant gehalten und die Konzentration des pulverförmigen Hochtemperaturbinders variiert. Es zeigt sich, dass mit steigendem Gehalt an pulverförmigem Hochtemperaturbinder die Porosität des Formkörpers zunimmt und die Festigkeit abnimmt. Es gelingt mit dem erfindungsgemäßen Verfahren Formkörper mit im Vergleich zu phenolharzgebundenen Formkörpern äquivalenten Festigkeiten herzustellen. Wesentlicher Vorteil der erfindungsgemäß hergestellten Formkörper ist jedoch deren anisotrope Koksstruktur. Die Vorteile der anisotropen Koksstruktur liegen in der allgemein höheren Flexibilität, der größeren Oxidationsbeständigkeit und der höheren Thermoschockbeständigkeit begründet.

Aus Beispiel 3 und den Vergleichsbeispielen ist erkennbar, dass die erfindungsgemäß hergestellten kohlenstoffgebundenen Feuerfesterzeugnisse gegenüber mit herkömmlichen Steinkohlenteer- oder Kunstharzbindesystemen gewonnenen Erzeugnissen wesentliche Vorteile besitzen. Sie vereinen die Vorteile beider zuvor genannten Systeme in sich. Die Formkörper können über das Kaltmischverfahren energiesparend und umweltfreundlich hergestellt werden beinhalten nur geringe Benzo[a]pyren-Gehalte und bilden dennoch anisotrope Koksstrukturen mit deren bekannten vorteilhaften Eigenschaften aus.

## Patentansprüche

1. Verfahren zum Herstellen von kohlenstoffgebundenen Feuerfesterzeugnissen aus feuerfesten Körnungen und organischem Bindemittel, **dadurch gekennzeichnet, dass** man als organisches Bindemittel ein pulverförmiges, grafitierbares Steinkohlenteerpech mit einem Benzo(a)pyrengehalt kleiner 500 mg/kg und einem Verkokungsrückstand von mindestens 80 Gew.% nach DIN 51905 als Hochtemperaturbinder und ein bei Raumtemperatur flüssiges grafitierbares Bindemittel mit einem Verkokungsrückstand von mindestens 15 Gew.% und einem Benzo[a]pyren-Gehalt von kleiner 500 ppm nach DIN 51905 einsetzt, dieses mit den übrigen Bestandteilen mischt, in einen Formkörper überführt und anschließend bei einer Temperatur von 150 bis 400°C wärmebehandelt, wobei das flüssige grafitierbare Bindemittel eine Lösung des Hochtemperaturbinders in einer Konzentration von 10 bis 65 Gew.% in einem hocharomatischen Öl ist.

2. Verfahren nach Anspruch 1, **dadurch gekennzeichnet, dass** man als organisches Bindemittel 0,5 bis 4 Gew.%, insbesondere 1 bis 2,5 Gew.%, Hochtemperaturbinder und 1,3 bis 4 Gew.%, insbesondere 2 bis 3 Gew. %, flüssiges Bindemittel, jeweils bezogen auf die Gesamtmasse des feuerfesten Gemischs, einsetzt.

3. Verfahren nach Anspruch 1 oder 2, **dadurch gekennzeichnet, dass** das Steinkohlenteerpech erhältlich ist durch Destillation von Steinkohlenteer in einer ersten Destillationsstufe unter Normaldruck oder vermindertem Druck und Destillation des Rückstands der ersten Destillationsstufe unter einem Druck von nicht mehr als 1 mbar in einem Verdampfer, wobei die Temperatur im Verdampfer im Temperaturbereich von 300 bis 380°C liegt und die mittlere Verweilzeit des Rückstands 2 bis 10 min beträgt.

4. Verfahren nach einem der Ansprüche 1 bis 3, **dadurch gekennzeichnet, dass** man als flüssiges Bindemittel eine Lösung des Steinkohlenteerpechs nach Anspruch 3 in einem Anthracenöl einsetzt.

5. Verfahren nach einem der Ansprüche 1 bis 4, **dadurch gekennzeichnet, dass** man das pulverförmige Steinkohlenteerpech in Form eines Pulvers mit einer mittleren Korngröße von 10 bis 500 µm einsetzt.

6. Verfahren nach einem der Ansprüche 1 bis 5, **dadurch gekennzeichnet, dass** das pulverförmige Steinkohlenteerpech einen Erweichungspunkt von über 180 °C aufweist.

7. Verfahren nach einem der Ansprüche 1 bis 6, **dadurch gekennzeichnet, dass** man das pulverförmige Steinkohlenteerpech vor dem Vermischen mit dem flüssigen Bindemittel mit einem naphthenischen Öl als Staubbindemittel versetzt, welches das Pech nicht anlöst.

8. Verfahren nach Anspruch 1, **dadurch gekennzeichnet, dass** man dem Gemisch aus feuerfesten Körnungen und organischem Bindemittel vor der Formgebung einen Kohlenstoffträger, insbesondere Graphit und/oder Ruß, zusetzt.

## Claims

1. A method for manufacturing carbon-bonded refractory products from refractory granulations and organic binder agents, **characterized in that** a powdery, graphitable coal-tar pitch with a benzo[a]pyrene content less than 500 mg/kg and a coking value of at least 80% by weight according to DIN 51905 as high temperature binders and a graphitable binder agent liquid at room temperature with a coking value of at least 15% by weight and a benzo[a]pyrene content less than 500 ppm according to DIN 51905, as organic binder agent, mixed with the remaining constituents, transferred to a moulded body, then heat treated at a temperature of 150 to 400 °C, wherein the liquid graphitable binder is a solution of the high temperature binder in a concentration of 10 to 15 % by weight in a high aromatic oil.

2. The method according to Claim 1, **characterized in that** 0.5 to 4% by weight of the high temperature binder, and 1.3 to 4% by weight of liquid binder agent, related in each case to the total weight of the refractory mixture, are used as organic binder agent.

3. The method according to Claim 1 or 2, **characterized in that** the coal-tar pitch is obtainable by distillation of coal tar in a first distillation stage, under normal or reduced pressure, and distillation of the residue of the first distillation stage under a pressure of no more than 1 mbar in an evaporator, wherein the temperature in the evaporator ranges from 300 to 380 °C, and the mean residence time of the residue is 2 to 10 minutes.

4. The method according to Claims 1 to 3, **characterized in that** a solution of the coal-tar pitch of Claim 3 in an anthracene oil is used.

5. The method according to Claims 1 to 4, **characterized in that** the powdery coal-tar pitch is used in the form of a powder with a mean grain size of 10 to 500 µm.

6. The method according to Claims 1 to 5, **characterized in that** the powdery coal-tar pitch has a softening point of over 180 °C.

7. The method according to Claims 1 to 6, **characterized in that** a naphthenic oil, which does not dissolve the pitch, is added to the powdery coal-tar pitch before mixing with the liquid binder agent as a dust binder.

8. The method according to Claim 1, **characterized in that** the carbon carrier, in particular graphite and/or carbon black, is added to the mixture of refractory granulations and organic binder agent before working.

## Revendications

1. Procédé pour la fabrication de produits réfractaires carburés, en grains réfractaires et en liant organique, **caractérisé en ce que** l'on utilise, en tant que liant organique, un brai de houille pulvérisé, pouvant être graphité, qui présente une teneur en benzo(a)pyrène inférieure à 500 mg / kg et un résidu de cokéfaction d'au moins 80% en poids selon DIN 51905, en tant que liant pour températures élevées, et un liant liquide à température ambiante, pouvant être graphité, avec un résidu de cokéfaction d'au moins 15% en poids et une teneur en benzo(a)pyrène inférieure à 500 ppm selon DIN 51905, on mélange celui-ci avec les autres composants, le transforme en un corps façonné et le traite ensuite à chaud à une température de 150 à 400° C, le liant liquide, pouvant être graphité, étant une solution du liant pour températures élevées, d'une concentration de 10 à 65% en poids, dans une huile fortement aromatique.

2. Procédé selon la revendication 1, **caractérisé en ce que** l'on utilise en tant que liant organique 0,5 à 4 % en poids, en particulier de 1 à 2,5 % en poids de liant pour températures élevées et 1,3 à 4 % en poids , en particulier de 2 à 3% en poids, de liant liquide, respectivement par rapport à la masse totale du mélange réfractaire.

3. Procédé selon revendication 1 ou 2, **caractérisé en ce que** le brai de houille est obtenu par distillation de goudron de houille, au cours d'une première étape de distillation sous pression normale ou sous pression réduite, et distillation du résidu de la première phase de distillation sous une pression de pas plus de 1 mbar, dans un évaporateur, la température dans l'évaporateur étant située dans un domaine de température de 300 à 380 ° C et le temps de séjour moyen du résidu étant de 2 à 10 minutes.

4. Procédé selon l'une des revendications 1 à 3, **caractérisé en ce que** l'on utilise en tant que liant liquide une solution du brai de houille selon la revendication 3, dans une huile d'anthracène.

5. Procédé selon l'une des revendications 1 à 4, **caractérisé en ce que** l'on utilise le brai de houille pulvérisé sous la forme d'une poudre d'une granulométrie moyenne de 10 à 500 µm.

6. Procédé selon l'une des revendications 1 à 5, **caractérisé en ce que** le brai de houille pulvérisé présente un point de ramollissement de plus de 180 °C.

7. Procédé selon l'une des revendications 1 à 6, **caractérisé en ce que,** avant de le mélanger avec le liant liquide, on ajoute au brai de houille pulvérisé une huile naphténique, en tant qu'agent anti poussière, qui cause pas d'érosion du brai.

8. Procédé selon la revendication 1, **caractérisé en ce que,** avant le formage, on ajoute au mélange de grains réfractaires et de liant organique un support carboné, en particulier du graphite et / ou du noir de carbone.
